# EUROPEAN PATENT SPECIFICATION

(11) **EP 2 185 796 B1**
(45) Date of publication and mention of the grant of the patent: **03.08.2011**
(21) Application number: 09785881.5
(22) Date of filing: 22.04.2009
(51) Int. Cl.: F01N 3/08, F01N 3/20, F01N 3/36, F01N 9/00

(54) **EXHAUST GAS PURIFICATION APPARATUS FOR INTERNAL COMBUSTION ENGINE AND METHOD OF CONTROLLING THE SAME**
ABGASREINIGUNGSVORRICHTUNG FÜR EINEN VERBRENNUNGSMOTOR UND VERFAHREN ZU IHRER STEUERUNG
APPAREIL DE PURIFICATION DES GAZ D'ÉCHAPPEMENT POUR MOTEUR À COMBUSTION INTERNE ET PROCÉDÉ PERMETTANT DE COMMANDER CELUI-CI

(30) Priority: 25.08.2008 JP 2008215283
(43) Date of publication of application: 19.05.2010
(73) Proprietor: TOYOTA JIDOSHA KABUSHIKI KAISHA, Aichi-ken, 471-8571 (JP)
(72) Inventor: TSUJIMOTO, Kenichi, AICHI-KEN 471-8571 (JP); INQUE, Mikio, AICHI-KEN 471-8571 (JP)
(74) Representative: Kuhnen & Wacker
(86) International application number: PCT/IB2009/005319
(87) International publication number: WO 2010/023514

(56) References cited:
- WO-A-2006/066043
- WO-A-2007/079832
- DE-A1-102005 039 630
- US-A1- 2007 006 573

## Description

### 1. Field of the Invention

The invention relates to an exhaust gas purification apparatus for an internal combustion engine and a method of controlling the same.

### 2. Description of the Related Art

Published Japanese Translation of PCT Application No. 2000-514911 (JP-A-2000-514911) describes a known combustor that brings an air-fuel mixture gas into contact with a catalyst to generate flames. The combustor includes a small catalyst that is able to electrically heat the catalyst and a large catalyst that is arranged downstream of the small catalyst in a direction in which the mixture gas flows. A mixture gas having a lean air-fuel ratio is continuously supplied to the electrically heated small catalyst to continuously generate flames downstream of the small catalyst. Then, the air-fuel ratio of the mixture gas is increased and the amount of the mixture gas is increased to continuously generate flames in the large catalyst.

In other words, in the above described combustor, a mixture gas having a lean air-fuel ratio is supplied to the small catalyst, so fuel is caused to bum with excessive air. This makes it possible to continuously generate flames. However, when fuel is supplied from a fuel supply valve to a small oxidation catalyst, the air-fuel ratio of exhaust gas that flows out from the small oxidation catalyst may be lean but is mostly rich. That is, exhaust gas flowing out from the small oxidation catalyst mostly contains excessive fuel.

Thus, as in the case of the above described combustor, when fuel is continuously caused to flow out from the small oxidation catalyst in order to continuously generate flames, not all fuel burns favorably because of insufficient air. A similar oxidation catalyst is shown in the document DE 102005039630 A1. Therefore, there is a problem that not only soot is generated but also a flame temperature does not sufficiently increase.

### SUMMARY OF THE INVENTION

The inventors have been studied that, in order to increase the temperature of a catalyst, or the like, a small oxidation catalyst and a fuel supply valve are arranged in an engine exhaust passage, the small oxidation catalyst has a cross-sectional area smaller than the cross-sectional area of the engine exhaust passage, the fuel supply valve is used to supply fuel to the small oxidation catalyst, and then fuel is supplied from the fuel supply valve to the small oxidation catalyst to generate flames downstream of the small oxidation catalyst. As a result, to generate high-temperature flames without generating soot in the engine exhaust passage, it has been found that flames are intermittently generated by intermittently supplying fuel from the fuel supply valve.

A first aspect of the invention provides an exhaust gas purification apparatus for an internal combustion engine. The exhaust gas purification apparatus includes: a small oxidation catalyst that is arranged in an engine exhaust passage and that has a cross-sectional area smaller than a cross-sectional area of the engine exhaust passage, wherein portion of exhaust gas flowing in the engine exhaust passage flows through the small oxidation catalyst; a fuel supply valve that is arranged in the engine exhaust passage and that supplies fuel to the small oxidation catalyst; a determination unit that determines whether flames is generated by supplying fuel from the fuel supply valve; and a control unit that, when the determination unit determines that the flames is generated by supplying fuel from the fuel supply valve, intermittently supplies fuel from the fuel supply valve to the small oxidation catalyst to intermittently generate flames downstream of the small oxidation catalyst.

A second aspect of the invention provides a method of controlling an exhaust gas purification apparatus for an internal combustion engine. The exhaust gas purification apparatus includes a small oxidation catalyst and a fuel supply valve. The small oxidation catalyst is arranged in an engine exhaust passage and has a cross-sectional area smaller than a cross-sectional area of the engine exhaust passage. Portion of exhaust gas flowing in the engine exhaust passage flows through the small oxidation catalyst. The fuel supply valve is arranged in the engine exhaust passage and supplies fuel to the small oxidation catalyst. The method includes: determining whether flames is generated by supplying fuel from the fuel supply valve; and, when it is determined that the flames is generated by supplying fuel from the fuel supply valve, intermittently supplying fuel from the fuel supply valve to the small oxidation catalyst to intermittently generate flames downstream of the small oxidation catalyst.

According to the aspects of the invention, it is possible to generate high-temperature flames while suppressing generation of soot in the engine exhaust passage.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG. 1 is a general view of a compression ignition internal combustion engine;
FIG 2A and FIG 2B are enlarged views around a small oxidation catalyst shown in FIG. 1;
FIG 3 is a view that illustrates NOx absorbing/releasing action;
FIG 4A and FIG. 4B are views that illustrate generation of flames;
FIG 5 is a view that shows a flame generation region;
FIG 6A, FIG 6B and FIG 6C are time charts that show a control for supplying fuel from a fuel supply valve;
FIG 7A, FIG 7B and FIG 7C are time charts that show a control for supplying fuel from the fuel supply valve;
FIG 8 is a time chart that shows a control for supplying fuel from the fuel supply valve;
FIG. 9 is a time chart that shows a control for supplying fuel from the fuel supply valve;
FIG 10 is a time chart that shows a control for supplying fuel from the fuel supply valve;
FIG 11 is a flowchart for carrying out exhaust gas purification process; and
FIG 12 is a view that shows a map of an occluded NOx amount NOXA.

### DETAILED DESCRIPTION OF EMBODIMENTS

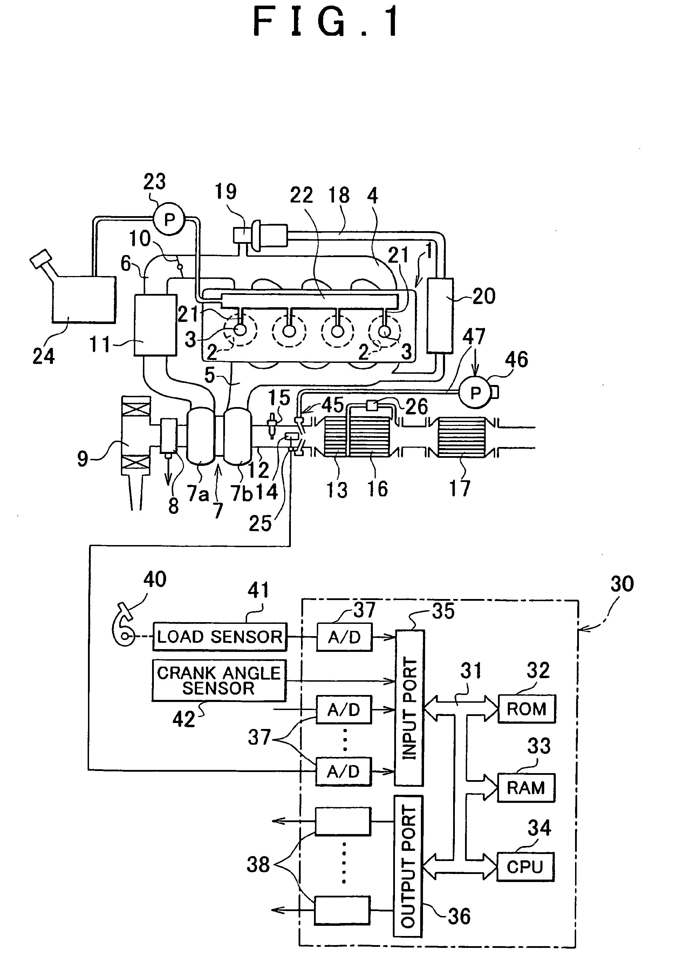

FIG 1 is a general view of a compression ignition internal combustion engine. FIG 1 shows an engine body 1, combustion chambers 2 of cylinders, electronically controlled fuel injection valves 3 for injecting fuel respectively to the combustion chambers 2, an intake manifold 4, and an exhaust manifold 5. The intake manifold 4 is connected to an outlet of a compressor 7a of an exhaust gas turbocharger 7 via an air intake duct 6. An inlet of the compressor 7a is connected to an air cleaner 9 via an intake air amount detector 8. A throttle valve 10 is arranged in the air intake duct 6 and is driven by a step motor. In addition, a cooling unit 11 is arranged around the air intake duct 6 to cool intake air that flows through the air intake duct 6. In an embodiment shown in FIG 1, engine coolant is introduced into the cooling unit 11, and intake air is cooled by the engine coolant.

On the other hand, the exhaust manifold 5 is connected to an inlet of an exhaust gas turbine 7b of the exhaust gas turbocharger 7, and an outlet of the exhaust gas turbine 7b is connected to an exhaust gas purification catalyst 13 via an exhaust pipe 12. The exhaust gas purification catalyst 13 has an oxidation function. A small oxidation catalyst 14 is arranged in an engine exhaust passage, that is, in the exhaust pipe 12, at a portion upstream of the exhaust gas purification catalyst 13. The small oxidation catalyst 14 has a volume smaller than that of the exhaust gas purification catalyst 13. Portion of exhaust gas flowing into the exhaust gas purification catalyst 13 flows through the small oxidation catalyst 14. A fuel supply valve 15 is arranged in the engine exhaust passage, that is, in the exhaust pipe 12, at a portion upstream of the small oxidation catalyst 14. The fuel supply valve 15 supplies fuel to the small oxidation catalyst 14.

In the embodiment shown in FIG 1, the exhaust gas purification catalyst 13 is made of an oxidation catalyst, and a particulate filter 16 is arranged in the engine exhaust passage at a portion downstream of the exhaust gas purification catalyst 13, that is, at a portion downstream of the oxidation catalyst 13. The particulate filter 16 collects particulates contained in exhaust gas. In addition, in the embodiment shown in FIG 1, a NOx occlusion catalyst 17 is arranged in the engine exhaust passage at a portion downstream of the particulate filter 16.

The exhaust manifold 5 and the intake manifold 4 are connected to each other via an exhaust gas recirculation (hereinafter, referred to as EGR) passage 18. An electronically controlled EGR control valve 19 is arranged in the EGR passage 18. In addition, the cooling unit 20 is arranged around the EGR passage 18 to cool EGR gas that flows through the EGR passage 18. In the embodiment shown in FIG 1, engine coolant is introduced into the cooling unit 20, and EGR gas is cooled by the engine coolant. On the other hand, each fuel injection valve 3 is connected to a common rail 22 via a fuel supply pipe 21, and the common rail 22 is connected to a fuel tank 24 via an electronically controlled variable displacement fuel pump 23. Fuel stored in the fuel tank 24 is supplied into the common rail 22 by the fuel pump 23, and the supplied fuel in the common rail 22 is supplied to each fuel injection valve 3 via a corresponding one of the fuel supply pipes 21.

An electronic control unit 30 is formed of a digital computer, and includes a read-only memory (ROM) 32, a random access memory (RAM) 33, a microprocessor (CPU) 34, an input port 35 and an output port 36, which are connected to one another via a bidirectional bus 31. A temperature sensor 25 is attached to the small oxidation catalyst 14. The temperature sensor 25 detects the temperature of the small oxidation catalyst 14. A differential pressure sensor 26 is attached to the particulate filter 16. The differential pressure sensor 26 detects a differential pressure before and after the particulate filter 16. Output signals of these temperature sensor 25, differential pressure sensor 26 and intake air amount detector 8 are input to the input port 35 through respective AD converters 37. A load sensor 41 is connected to an accelerator pedal 40. The load sensor 41 generates an output voltage in proportion to a depression amount L of the accelerator pedal 40. The output voltage of the load sensor 41 is input to the input port 35 via a corresponding one of the AD converter 37. In addition, a crank angle sensor 42 is connected to the input port 35. The crank angle sensor 42 generates an output pulse each time a crankshaft rotates, for example, by 15 degrees. On the other hand, the output port 36 is connected to each fuel injection valve 3, a step motor for driving the throttle valve 10, the EGR control valve 19 and the fuel pump 23 via corresponding driving circuits 38.

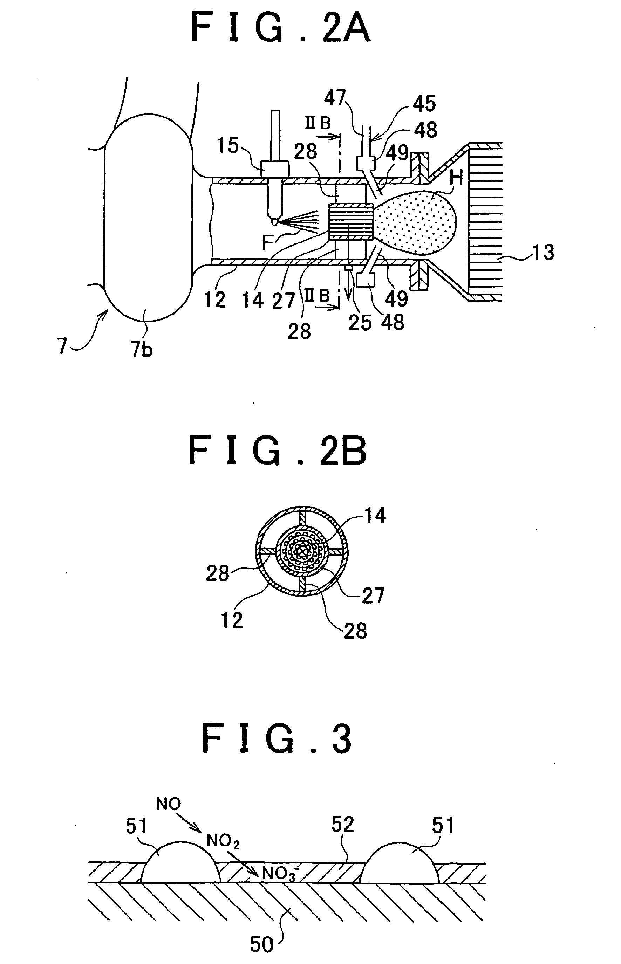

FIG 2A shows an enlarged view of a portion around the small oxidation catalyst 14 shown in FIG. 1. FIG 2B shows a cross-sectional view that is taken along the line IIB-IIB in FIG 2A. In the embodiment shown in FIG 2A and FIG 2B, the small oxidation catalyst 14 has a base formed of a laminated structure of a metal thin flat plate and a metal thin corrugated plate. A layer of a catalyst carrier made of, for example, alumina is formed on a surface of the base. A precious metal catalyst, such as platinum Pt, rhodium Rd, and palladium Pd, is supported on the catalyst carrier. Note that the base may be made of cordierite.

As is apparent from FIG 2A and FIG 2B, the small oxidation catalyst 14 has a cross section that is smaller in area than the cross section of a passage through which exhaust gas flows toward the exhaust gas purification catalyst 13 (or the oxidation catalyst 13), that is, a cross section that is smaller in area than the cross section of the exhaust pipe 12, and the small oxidation catalyst 14 has a cylindrical shape extending in a direction in which exhaust gas flows at the center of the exhaust pipe 12. Note that, in the embodiment shown in FIG 2A and FIG 2B, the small oxidation catalyst 14 is arranged inside a cylindrical outer frame 27, and the cylindrical outer frame 27 is supported inside the exhaust pipe 12 by a plurality of stays 28.

On the other hand, as shown in FIG 1 and FIG 2A, a secondary air supply device 45 is attached to the exhaust pipe 12 to supply secondary air into the exhaust pipe 12. The secondary air supply device 45 includes an air pump 46, an introducing pipe 47, and a plurality of secondary air supply nozzles 49. The air pump 46 is controlled on the basis of an output signal of the electronic control unit 30. The introducing pipe 47 transfers secondary air, discharged from the air pump 46, to an annular secondary air distribution chamber 48 around the exhaust pipe 12. The plurality of secondary air supply nozzles 49 extend from the secondary air distribution chamber 48 toward the downstream side of the small oxidation catalyst 14.

In the embodiment shown in FIG 1, the oxidation catalyst 13 is formed of a monolithic catalyst that supports, for example, a precious metal catalyst, such as platinum Pt. In contrast, in the embodiment shown in FIG 1, no precious metal catalyst is supported on the particulate filter 16. Instead, a precious metal catalyst, such as platinum Pt, may be supported on the particulate filter 16, and, in this case, the oxidation catalyst 13 may be omitted.

On the other hand, a catalyst carrier made of, for example, alumina is also supported on a base of the NOx occlusion catalyst 17 shown in FIG. 1. FIG 3 schematically illustrates the cross section of a surface portion of a catalyst carrier 50. As shown in FIG 3, precious metal catalysts 51 are dispersedly supported on a surface of the catalyst carrier 50, and a layer of a NOx absorbent 52 is formed on a surface of the catalyst carrier 50.

In the example shown in FIG 3, platinum Pt is used as the precious metal catalyst 51, a component that constitutes the NOx absorbent 52, for example, uses at least one selected from an alkali metal, such as potassium K, sodium Na and cesium Cs, an alkaline earth, such as barium Ba and calcium Ca, and a rare earth, such as lanthanum La and yttrium Y.

If the ratio between air and fuel (hydrocarbon) that are supplied into an engine intake passage, the combustion chambers 2 and the exhaust passage upstream of the NOx occlusion catalyst 17 is referred to as the air-fuel ratio of exhaust gas, the NOx absorbent 52 occludes NOx when the air-fuel ratio of exhaust gas is lean, and releases the occluded NOx when the concentration of oxygen in exhaust gas decreases, thus carrying out NOx absorbing/releasing action.

That is, taking the case where barium Ba is used as a component that constitutes the NOx absorbent 52 as an example, when the air-fuel ratio of exhaust gas is lean, that is, when the concentration of oxygen in exhaust gas is high, NO contained in the exhaust gas is oxidized to NO₂ on the platinum Pt 51 as shown in FIG. 3, and, subsequently, the NO₂ is absorbed into the NOx absorbent 52 to be bonded with barium carbonate BaCO₃ while being diffused in the NOx absorbent 52 in the form of nitrate ion NO₃⁻. In this manner, NOx is occluded into the NOx absorbent 52. As long as the concentration of oxygen contained in exhaust gas is high, NO₂ is generated on the surface of the platinum Pt 51. Unless the NOx absorption capacity of the NOx absorbent 52 is saturated, NO₂ is absorbed into the NOx absorbent 52 to produce nitrate ion NO₃⁻.

In contrast, when the air-fuel ratio of exhaust gas is rich or stoichiometric, the concentration of oxygen in exhaust gas decreases. Thus, reaction proceeds in the reverse direction (from NO₃⁻ to NO₂) and, as a result, nitrate ions NO₃⁻ in the NOx absorbent 52 are released from the NOx absorbent 52 in the form of NO₂. Subsequently, the released NOx is reduced by unburned HC or CO contained in exhaust gas.

In this way, when the air-fuel ratio of exhaust gas is lean, that is, when combustion takes place at a lean air-fuel ratio, NOx contained in exhaust gas is occluded into the NOx absorbent 52. However, when combustion continuously takes place at a lean air-fuel ratio, the NOx absorption capacity of the NOx absorbent 52 is saturated during then. As a result, NOx cannot be absorbed by the NOx absorbent 52. Then, in the present embodiment, by supplying fuel from the fuel supply valve 15 prior to saturation of the absorption capacity of the NOx absorbent 52, the air-fuel ratio of exhaust gas is temporarily made rich to release NOx from the NOx absorbent 52.

Incidentally, SOx, that is, SO₂, is contained in exhaust gas. If the SO₂ flows into the NOx occlusion catalyst 17, the SO₂ is oxidized by the platinum Pt 51 to SO₃. Subsequently, the SO₃ is absorbed into the NOx absorbent 52 to be bonded with barium carbonate BaCO₃ while being diffused in the NOx absorbent 52 in the form of sulfate ion SO₄²⁻ to produce stable sulfate BaySO₄. However, because the NOx absorbent 52 is strongly basic, the sulfate BaSO₄ is stable and is difficult to be decomposed. If only the air-fuel ratio of exhaust gas is simply made rich, the sulfate BaSO₄ remains as it is without decomposition. Thus, the NOx absorbent 52 contains increased sulfate BaSO₄ as time elapses. As a result, as time elapses, the amount of NOx the NOx absorbent 52 can absorb decreases. That is, the NOx occlusion catalyst 17 experiences sulfur poisoning.

Incidentally, in this case, in a state where the temperature of the NOx occlusion catalyst 17 is increased to a SOx release temperature, which is higher than or equal to 600°C, when the air-fuel ratio of exhaust gas that flows into the NOx occlusion catalyst 17 is made rich, SOx is released from the NOx absorbent 52. Then, in the present embodiment, when the NOx occlusion catalyst 17 experiences sulfur poisoning, fuel is supplied from the fuel supply valve 15 to increase the temperature of the NOx occlusion catalyst 17 to the SOx release temperature. Thus, the air-fuel ratio of exhaust gas that flows into the NOx occlusion catalyst 17 is made rich to release SOx from the NOx occlusion catalyst 17.

In the embodiment shown in FIG 2A, the nozzle opening of the fuel supply valve 15 is arranged at the center of the cross section of the exhaust pipe 12, and fuel F, that is, light oil F, is supplied from the nozzle opening toward the upstream-side end face of the small oxidation catalyst 14. At this time, when the small oxidation catalyst 14 is activated, fuel is oxidized in the small oxidation catalyst 14, and heat of oxidation reaction generated at this time increases the temperature of the small oxidation catalyst 14.

Incidentally, because flow resistance is large inside the small oxidation catalyst 14, the amount of exhaust gas that flows through the small oxidation catalyst 14 is small. In addition, as oxidation reaction occurs in the small oxidation catalyst 14, gas expands inside the small oxidation catalyst 14. Thus, the amount of exhaust gas that flows through the small oxidation catalyst 14 further reduces. In addition, as the gas temperature increases due to oxidation reaction, the viscosity of gas increases. Thus, the amount of exhaust gas that flows through the small oxidation catalyst 14 further reduces. Hence, the flow rate of exhaust gas inside the small oxidation catalyst 14 is considerably lower than the flow rate of exhaust gas that flows inside the exhaust pipe 12.

In this way, because the flow rate of exhaust gas inside the small oxidation catalyst 14 is low, oxidation reaction is activated in the small oxidation catalyst 14. In addition, because the volume of the small oxidation catalyst 14 is small, the temperature of the small oxidation catalyst 14 rapidly increases to a considerably high temperature. At this time, as the temperature of the small oxidation catalyst 14 is higher than the ignition temperature of fuel, fuel flowing out from the small oxidation catalyst 14 ignites, and flames are generated downstream of the small oxidation catalyst 14 as indicated by H in FIG 2A.

That is, as fuel is supplied from the fuel supply valve 15 to the small oxidation catalyst 14, portion of the supplied fuel is oxidized in the small oxidation catalyst 14. On the other hand, the remaining supplied fuel is decomposed, that is, reformed, into hydrocarbons having low molecular weight in the small oxidation catalyst 14. As a result, the reformed fuel flows out from the small oxidation catalyst 14. At this time, the air-fuel ratio of exhaust gas that flows out from the small oxidation catalyst 14 may be lean but is mostly rich. That is, exhaust gas flowing out from the small oxidation catalyst 14 at this time mostly contains excessive fuel.

At this time, when the temperature of the small oxidation catalyst 14 is higher than the ignition temperature, flames H are generated as shown in FIG 2A. In this case, if fuel is caused to continuously flow out from the small oxidation catalyst 14 in order to continuously generate flames H, not all fuel bums favorably because of insufficient air. Therefore, there is a problem that not only soot is generated but also a flame temperature does not sufficiently increase. In contrast, at this time, when fuel is caused to intermittently flow out from the small oxidation catalyst 14 to intermittently generate flames, fuel flowing out from the small oxidation catalyst 14 is supplied into the atmosphere in which air is excessive. Thus, all fuel flowing out from the small oxidation catalyst 14 can be burned favorably.

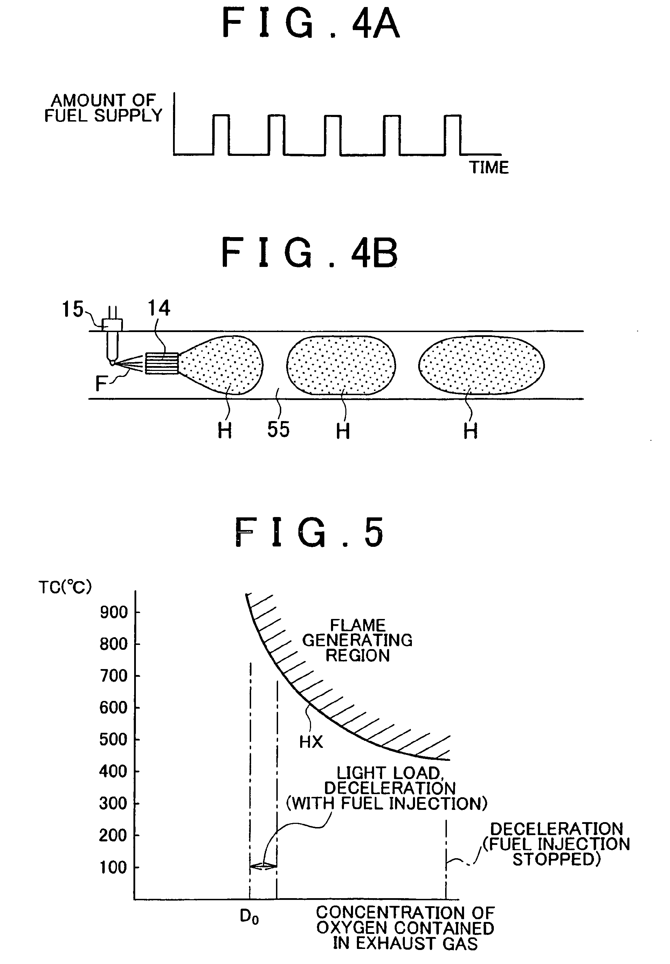

Then, in the present embodiment shown in FIG 4A, fuel is intermittently supplied from the fuel supply valve 15 to intermittently generate flames H as shown in FIG 4B. Note that FIG. 4B schematically illustrates masses of flames H, that is, flame masses H, that are generated intermittently inside the exhaust passage 55.

As shown in FIG 4B, in the present embodiment, flame masses H are sequentially generated so as not to overlap each other. Thus, in the present embodiment, the timing at which fuel is supplied from the fuel supply valve 15 is set so that flame masses that are sequentially intermittently generated downstream of the small oxidation catalyst 14 do not overlap each other.

As shown in FIG. 4B, in order for flame masses H not to overlap each other, it is necessary that fuel is caused to intermittently flow out from the small oxidation catalyst 14. Thus, in other words, in the present embodiment, the timing at which fuel is supplied from the fuel supply valve 15 is set so that fuel is intermittently supplied from the small oxidation catalyst 14.

Note that as described above, when fuel is supplied from the fuel supply valve 15 to the small oxidation catalyst 14, the air-fuel ratio of exhaust gas that flows out from the small oxidation catalyst 14 is rich. Thus, at the time of generating flames H, exhaust gas having a rich air-fuel ratio intermittently flows out from the small oxidation catalyst 14.

Next, a region in which flames H are generated will be described. In FIG 5, the region on the upper side with respect to the solid line HX indicates a flame generating region. As shown in FIG 5, the flame generating region is determined on the basis of the function of a temperature TC of the small oxidation catalyst 14 and the concentration of oxygen contained in exhaust gas. Note that in FIG. 5, the solid line HX represents the relationship between a concentration of oxygen contained in exhaust gas and a catalyst temperature TC when fuel ignites. The catalyst temperature TC at the time when fuel ignites increases as the concentration of oxygen contained in exhaust gas decreases.

FIG 5 shows a range of the concentration of oxygen contained in exhaust gas during light load operation, including idling, and during deceleration operation in which fuel is being injected from the fuel injection valves 3, and the concentration of oxygen contained in exhaust gas during deceleration operation when fuel injection from the fuel injection valves 3 is stopped. Air is exhaust gas when fuel injection is stopped, so the concentration of oxygen contained in the exhaust gas is approximately 21 percent at this time. The concentration of oxygen contained in exhaust gas during light load or deceleration (with fuel injection) is lower than the above concentration of oxygen, and the catalyst temperature TC at which fuel ignites during light load or deceleration (with fuel injection) is about 800°C.

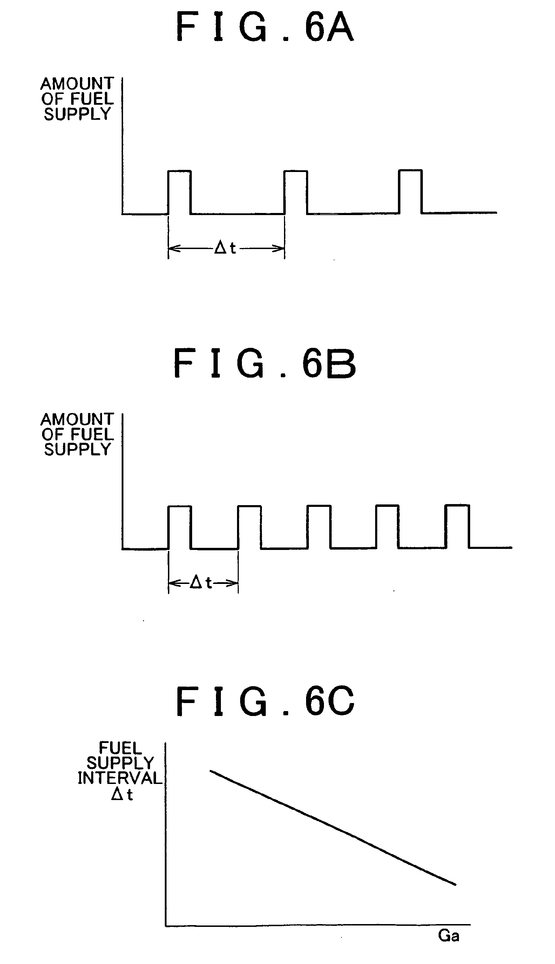

When the oxidation catalyst 13, and the like, are not activated, it is necessary to increase the temperature of the oxidation catalyst 13, and the like, in order to activate the oxidation catalyst 13, and the like. In addition, to bum particulates accumulated on the particulate filter 16, it is necessary to increase the temperature of the particulate filter 16 to approximately 600°C. When SOx is released from the NOx occlusion catalyst 17 as well, it is necessary to increase the temperature of the NOx occlusion catalyst 17 to the SOx release temperature, which is higher than or equal to 600°C. FIG 6A and FIG 6B show amounts of fuel supplied from the fuel supply valve 15 when flames H are generated to increase the temperatures of the oxidation catalyst 13, particulate filter 16 and NOx occlusion catalyst 17.

Note that FIG 6A shows the amount of fuel supply when the flow rate of exhaust gas is low, and FIG 6B shows the amount of fuel supply when the flow rate of exhaust gas is high. In both cases, fuel is supplied at constant time intervals Δt. In this case, in order for flame masses H not to overlap each other, it is necessary that the interval Δt of the timings at which fuel supply is started is extended as the flow rate of exhaust gas decreases. Thus, as shown in FIG 6C, as the flow rate of exhaust gas decreases, that is, as the intake air amount Gad reduces, the interval Δt of the timings at which fuel supply is started is extended.

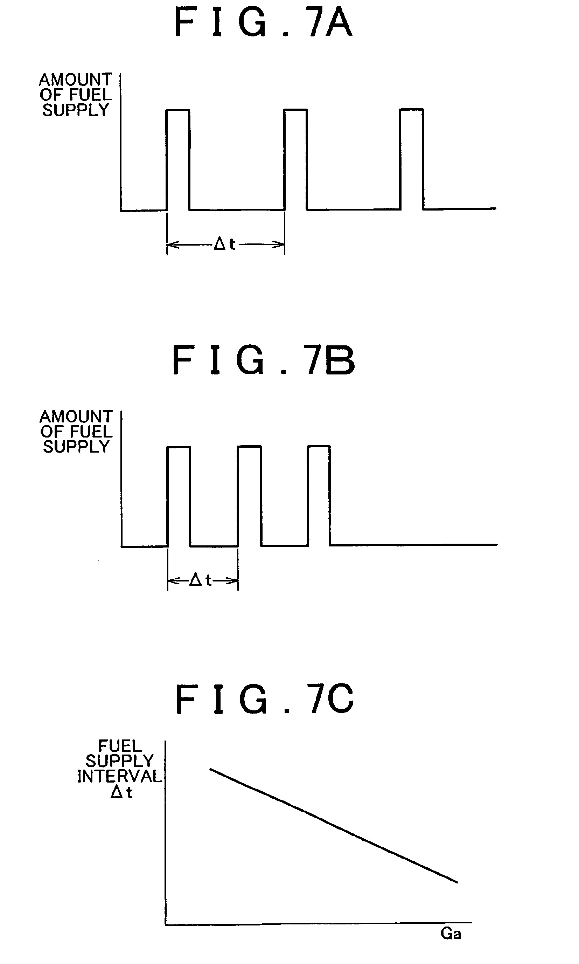

FIG 7A and FIG. 7B show amounts of fuel supplied from the fuel supply valve 15 when flames H are intermittently generated while the air-fuel ratio of exhaust gas is made rich to release NOx or SOx from the NOx occlusion catalyst 17. As shown in FIG 6A and FIG 6B, when the temperatures of the oxidation catalyst 13, particulate filter 16 and NOx occlusion catalyst 17 need to be increased, fuel is supplied from the fuel supply valve 15 so that the air-fuel ratio of exhaust gas that flows into these oxidation catalyst 13, particulate filter 16 and NOx occlusion catalyst 17 is made lean. In contrast, in the case shown in FIG 7A and FIG 7B, fuel is supplied from the fuel supply valve 15 so that the air-fuel ratio of exhaust gas that flows into the NOx occlusion catalyst 17 is intermittently made rich. Thus, in comparison with the case shown in FIG 6A and FIG 6B, in the case shown in FIG 7A and FIG. 7B, the amount of fuel supplied from the fuel supply valve 15 each time is equal to or more than double.

For releasing NOx or SOx from the NOx occlusion catalyst 17, when flames H are intermittently generated while the air-fuel ratio of exhaust gas is made rich, that is, when flames of a rich air-fuel ratio are intermittently generated, it is possible to considerably favorably release NOx or SOx from the NOx occlusion catalyst 17 and favorably reduce the released NOx or SOx. That is, because generated flames consume almost entire oxygen contained in exhaust gas, oxygen contained in the exhaust gas sharply reduces. Thus, NOx is rapidly released from the NOx occlusion catalyst 17. In addition, generated flames promote thermal decomposition to produce strongly active reduction components, such as HC, CO, and H₂. Thus, NOx released from the NOx occlusion catalyst 17 is favorably reduced. The same applies to SOx.

In this way, when NOx or SOx is released from the NOx occlusion catalyst 17, it is desirable to intermittently generate flames of a rich air-fuel ratio. Thus, in the present embodiment, when NOx or SOx needs to be released from the NOx occlusion catalyst 17, flames of a rich air-fuel ratio are intermittently generated as much as possible.

Note that FIG 7A shows the amount of fuel supply when the flow rate of exhaust gas is low, and FIG 7B shows the amount of fuel supply when the flow rate of exhaust gas is high. In both cases, fuel is injected at constant time intervals Δt. Note that in the case as well, in order for flame masses H not to overlap each other, it is necessary that the interval Δt of the timings at which fuel supply is started is extended as the flow rate of exhaust gas decreases. Thus, as shown in FIG 7C, as the flow rate of exhaust gas decreases, that is, as the intake air amount Ga reduces, the interval Δt of the timings at which fuel supply is started is extended.

Incidentally, when the small oxidation catalyst 14 is activated, it is possible to easily increase the temperature of the small oxidation catalyst 14 to 800°C or above. Thus, as is apparent from FIG 5, flames can be generated during light load, including idling, or during deceleration. However, as an engine load increases, the amount of fuel injected from the fuel injection valves 3 increases to decrease the air-fuel ratio. Thus, the concentration of oxygen contained in exhaust gas is considerably lower than the concentration of oxygen during light load or during deceleration (with fuel injection) shown in FIG. 5. As a result, it is difficult to generate flames.

Then, in the present embodiment, when oxygen is insufficient to generate flames, secondary air is supplied from the secondary air supply device 45 into the engine exhaust passage. Specifically, when the engine is operating at an intermediate load or at a high load, the amount of secondary air necessary for adjusting the concentration of oxygen contained in exhaust gas to, for example, the oxygen concentration during light load or deceleration (with fuel injection) shown in FIG 5 is calculated. Secondary air of the calculated amount is supplied from the secondary air supply nozzles 49.

Supplying secondary air when oxygen is insufficient, to generate flames in this way is carried out when the temperatures of the oxidation catalyst 13, particulate filter 16 and NOx occlusion catalyst 17 are increased. When secondary air is supplied at the time when NOx or SOx needs to be released from the NOx occlusion catalyst 17, there is a possibility that the air-fuel ratio of exhaust gas cannot be maintained at a rich air-fuel ratio. Thus, when oxygen is insufficient to generate flames at the time when NOx or SOx needs to be released from the NOx occlusion catalyst 17, no secondary air is supplied. In this case, no flame is generated to allow a rich air-fuel ratio.

That is, in the present embodiment, when NOx or SOx needs to be released from the NOx occlusion catalyst 17, it is determined whether the operating state of the engine is such that flames of a rich air-fuel ratio H can be generated. When NOx or SOx needs to be released from the NOx occlusion catalyst 17, and when the operating state of the engine is such that flames of a rich air-fuel ratio H can be generated, flames H are generated. In contrast, when the operating state of the engine is not such that flames of a rich air-fuel ratio H can be generated at the time when NOx or SOx needs to be released from the NOx occlusion catalyst 17, the air-fuel ratio of exhaust gas that flows into the NOx occlusion catalyst 17 is made rich without generating flames H.

Note that in this case, in the present embodiment, when the engine is operating at a light load or decelerating, it is determined that the operating state of the engine is such that flames of a rich air-fuel ratio can be generated. Thus, when the engine is operating at a light load or decelerating at the time when NOx or SOx needs to be released from the NOx occlusion catalyst 17 , flames of a rich air-fuel ratio are generated.

Note that, as is apparent from FIG 5, flames can be generated when the concentration of oxygen contained in exhaust gas is, for example, higher than a predetermined oxygen concentration indicated by Do in FIG 5, that is, when the air-fuel ratio of exhaust gas is higher than a predetermined air-fuel ratio. In other words, in the present embodiment, when the air-fuel ratio of exhaust gas is higher than the predetermined air-fuel ratio, it is determined that the operating state of the engine is such that flames of a rich air-fuel ratio can be generated.

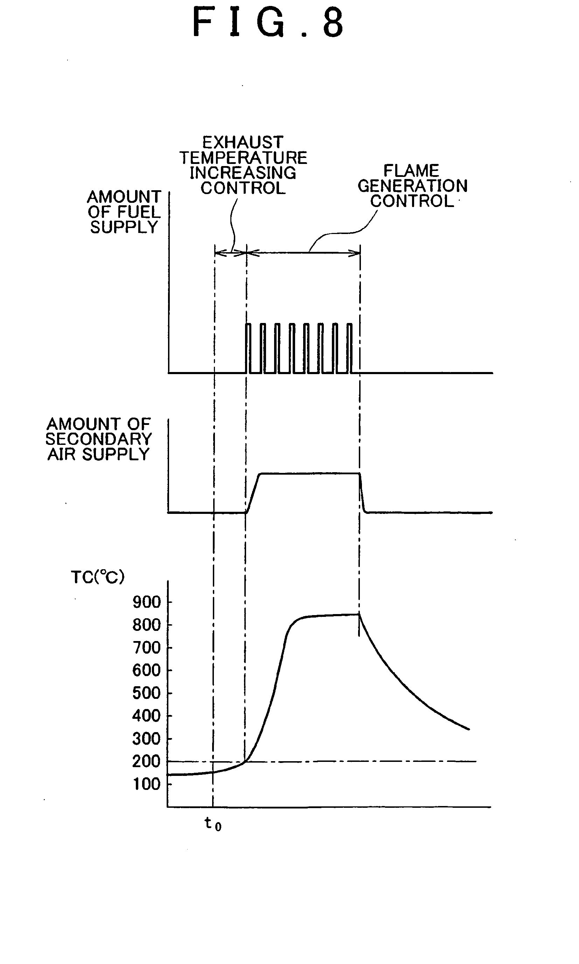

Next, fuel supply control executed in the present embodiment will be described with reference to FIG 8 to FIG 10. Note that FIG 8 to FIG. 10 each show the amount of fuel supplied from the fuel supply valve 15, the amount of secondary air supply, and a variation in temperature TC of the small oxidation catalyst 14. In FIG 8 to FIG 10, time t0 represents time at which an instruction for starting supply of fuel from the fuel supply valve 15 is issued in order to increase temperature or other purposes. In addition, FIG 8 to FIG 10 illustrate the case where the small oxidation catalyst 14 is activated at a temperature of 200°C.

First, the case in which flames are intermittently generated to increase the temperatures of the oxidation catalyst 13, particulate filter 16 and NOx occlusion catalyst 17 will be described with reference to FIG 8. As is apparent from the temperature TC of the small oxidation catalyst 14, FIG 8 shows the case where the small oxidation catalyst 14 is not activated at time t0. If fuel is supplied from the fuel supply valve 15 when the small oxidation catalyst 14 is not activated, the supplied fuel does not undergo oxidation reaction in the small oxidation catalyst 14 and cannot generate flames.

Thus, in this case, exhaust gas temperature increasing control is carried out to increase the temperature of exhaust gas until the small oxidation catalyst 14 is activated, and, when the small oxidation catalyst 14 is activated, fuel is intermittently supplied from the fuel supply valve 15. The exhaust gas temperature increasing control is, for example, carried out by retarding the timing at which fuel is injected into each combustion chamber 2. Note that when oxygen is insufficient to generate flames, secondary air is supplied while fuel is being intermittently supplied, that is, while flame generation control is being carried out, as shown in FIG 8. Note that generation of flames is started while fuel is being intermittently supplied, that is, during flame generation control, and, during the flame generation control, the air-fuel ratio of exhaust gas that flows into the oxidation catalyst 13, particulate filter 16 and NOx occlusion catalyst 17 is maintained at a lean air-fuel ratio.

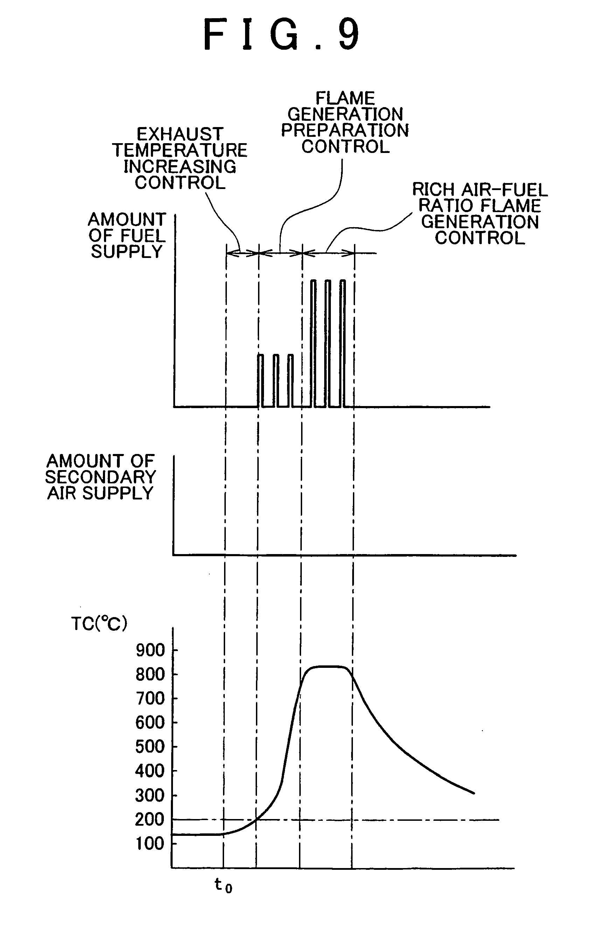

FIG 9 shows the case where flames of a rich air-fuel ratio are generated to cause the NOx occlusion catalyst 17 to release NOx during light load or during deceleration. In this case as well, when the small oxidation catalyst 14 is not activated at time t0, exhaust gas temperature increasing control is carried out, and, when the small oxidation catalyst 14 is activated, flame generation preparation control is carried out to increase the temperature of the small oxidation catalyst 14 for generating flames. During the flame generation preparation control, fuel of the same amount as that during the flame generation control shown in FIG 8 is intermittently supplied, and the flame generation preparation control continues until flames are generated. During the flame generation preparation control, the air-fuel ratio of exhaust gas that flows into the oxidation catalyst 13, particulate filter 16 and NOx occlusion catalyst 17 is maintained at a lean air-fuel ratio.

As flames are generated, the amount of fuel supply is increased, and the increased amount of fuel is intermittently supplied. At this time, that is, during rich flame generation control, flames of a rich air-fuel ratio are generated, and NOx is released from the NOx occlusion catalyst 17. Note that, when SOx is released from the NOx occlusion catalyst 17, the duration of the rich flame generation control is longer than the case shown in FIG 9.

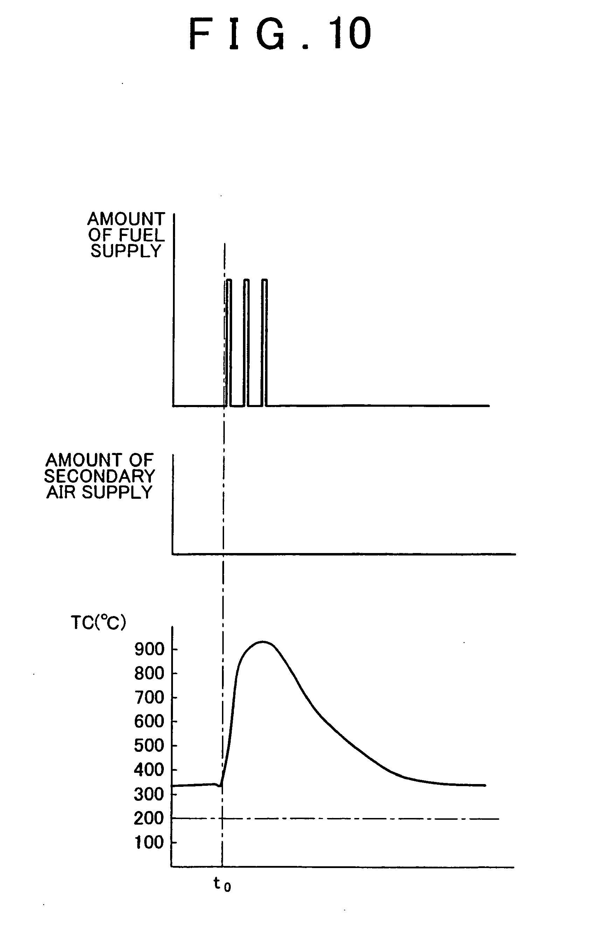

FIG 10 shows the case where NOx is released from the NOx occlusion catalyst 17 when the engine is operating at an intermediate or high load. When the engine is operating at an intermediate or high load, the temperature of exhaust gas is high. Thus, at this time, the small oxidation catalyst 14 is mostly activated. In addition, when the engine is operating at an intermediate or high load, the concentration of oxygen contained in exhaust gas is low. Thus, it is difficult to generate flames of a rich air-fuel ratio. Thus, at this time, as shown in FIG 10, fuel of the same amount as that during the rich flame generation control of FIG. 9 is supplied from the fuel supply valve 15 at time t0, and the air-fuel ratio of exhaust gas that flows into the NOx occlusion catalyst 17 is intermittently made rich without generating flames.

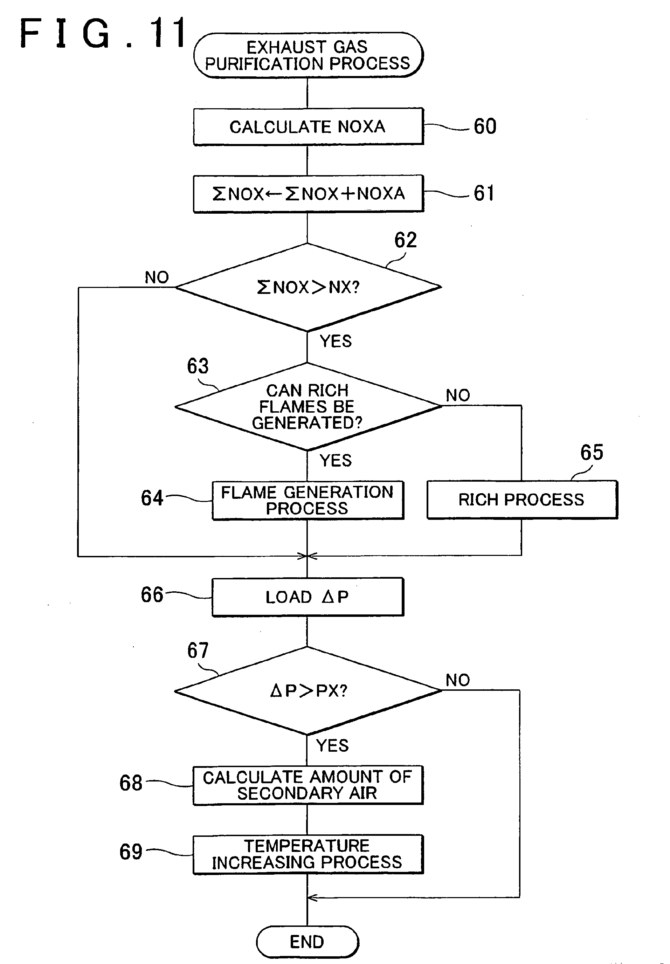

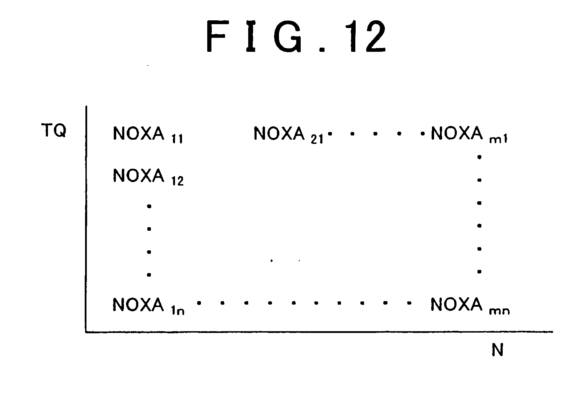

FIG 11 shows an exhaust gas purification process routine. The routine is executed by interrupt at constant time intervals. Referring to FIG 11, first, in step 60, an amount NOXA of NOx occluded into the NOx occlusion catalyst 17 per unit time is calculated. The NOx amount NOXA is stored beforehand in the ROM 32 in the form of a map shown in FIG 12 as a function of a required torque TQ and an engine rotational speed N. Subsequently, in step 61, the calculated NOXA is added to a NOx amount ΣNOX occluded in the NOx occlusion catalyst 17. Then, in step 62, it is determined whether the occluded NOx amount ΣNOX exceeds an allowable value NX. When ΣNOX is smaller than or equal to NX, the process proceeds to step 66.

In contrast, in step 62, when it is determined that ΣNOX is larger than NX, the process proceeds to step 63. In step 63, it is determined whether flames of a rich air-fuel ratio can be generated, that is, the engine is operating at a light load or decelerating. When it is determined that flames can be generated, the process proceeds to step 64. In step 64, the process of intermittently generating flames of a rich air-fuel ratio H, that is, the fuel supply control shown in FIG 9, is carried out, and ΣNOX is cleared. Subsequently, the process proceeds to step 66. In contrast, when it is determined that flames cannot be generated, the process proceeds to step 65. In step 65, the process of intermittently making the air-fuel ratio rich without generating flames, that is, the fuel supply control shown in FIG 10, is carried out, and ΣNOX is cleared. Subsequently, the process proceeds to step 66.

In step 66, a differential pressure ΔP before and after the particulate filter 16 is detected by the differential pressure sensor 26. After that, in step 67, it is determined whether the differential pressure ΔP exceeds an allowable value PX. When ΔP is larger than PX, the process proceeds to step 68. In step 68, an amount of secondary air necessary for generating flames is calculated. Subsequently, in step 69, in order to regenerate the particulate filter 16, the process of intermittently generating flames H to increase the temperature of the particulate filter 16, that is, the fuel supply control shown in FIG 8, is carried out.

## Claims

1. An exhaust gas purification apparatus for an internal combustion engine, comprising:
a small oxidation catalyst (14) that is arranged in an engine exhaust passage and that has a cross-sectional area smaller than a cross-sectional area of the engine exhaust passage, wherein portion of exhaust gas flowing in the engine exhaust passage flows through the small oxidation catalyst;
a fuel supply valve (15) that is arranged in the engine exhaust passage and that supplies fuel to the small oxidation catalyst (14), **characterized in that** it further comprises a determination unit (30) that determines whether flames is generated by supplying fuel from the fuel supply valve (15); and
a control unit (30) that, when the determination unit (30) determines that the flames is generated by supplying fuel from the fuel supply valve (15), intermittently supplies fuel from the fuel supply valve (15) to the small oxidation catalyst (14) to intermittently generate flames downstream of the small oxidation catalyst (14).

2. The exhaust gas purification apparatus for an internal combustion engine according to claim 1, wherein a timing at which fuel is supplied from the fuel supply valve (15) is set so that flame masses sequentially intermittently generated downstream of the small oxidation catalyst (14) do not overlap each other.

3. The exhaust gas purification apparatus for an internal combustion engine according to claim 2, wherein a timing at which fuel is supplied from the fuel supply valve (15) is set so that fuel is intermittently supplied from the small oxidation catalyst (14).

4. The exhaust gas purification apparatus for an internal combustion engine according to claim 2, wherein a timing at which fuel is supplied from the fuel supply valve (15) is set so that exhaust gas having a rich air-fuel ratio intermittently flows out from the small oxidation catalyst (14).

5. The exhaust gas purification apparatus for an internal combustion engine according to any one of claims 1 to 4, wherein the small oxidation catalyst (14) has a cylindrical shape extending in a direction in which exhaust gas flows.

6. The exhaust gas purification apparatus for an internal combustion engine according to claim 5, wherein fuel is supplied from the fuel supply valve (15) toward an upstream-end face of the small oxidation catalyst (14).

7. The exhaust gas purification apparatus for an internal combustion engine according to any one of claims I to 6, wherein an interval of timings, at which supply of fuel from the fuel supply valve (15) is started, is extended as an intake air amount reduces.

8. The exhaust gas purification apparatus for an internal combustion engine according to any one of claims 1 to 7, further comprising:
a secondary air supply device (45) that supplies secondary air into the engine exhaust passage, wherein
when oxygen is insufficient to generate flames, secondary air is supplied into the engine exhaust passage.

9. The exhaust gas purification apparatus for an internal combustion engine according to any one of claims 1 to 8, further comprising:
one of an exhaust gas purification catalyst (13) and a particulate filter (16) arranged in the engine exhaust passage at a portion downstream of the small oxidation catalyst (14), wherein flames are generated when the temperature of the one of the exhaust gas purification catalyst (13) and the particulate filter (16) needs to be increased.

10. The exhaust gas purification apparatus for an internal combustion engine according to any one of claims 1 to 9, further comprising:
a NOx occlusion catalyst (17) arranged in the engine exhaust passage at a portion downstream of the small oxidation catalyst (14), wherein the NOx occlusion catalyst (17) occludes NOx contained in exhaust gas when the air-fuel ratio of exhaust gas flowing into the NOx occlusion catalyst (17) is lean, and releases the occluded NOx when the air-fuel ratio of exhaust gas flowing into the NOx occlusion catalyst (17) is rich, and wherein flames of a rich air-fuel ratio are intermittently generated when NOx or SOx needs to be released from the NOx occlusion catalyst (17).

11. The exhaust gas purification apparatus for an internal combustion engine according to claim 10, wherein, when NOx or SOx needs to be released from the NOx occlusion catalyst (17), it is determined whether an operating state of an engine is such that flames of a rich air-fuel ratio can be generated, wherein, when NOx or SOx needs to be released from the NOx occlusion catalyst (17), and when the operating state of the engine is such that flames of a rich air-fuel ratio can be generated, flames are generated, and wherein, when NOx or SOx needs to be released from the NOx occlusion catalyst (17), and when the operating state of the engine is not such that flames of a rich air-fuel ratio can be generated, the air-fuel ratio of exhaust gas that flows into the NOx occlusion catalyst (17) is made rich without generating flames.

12. The exhaust gas purification apparatus for an internal combustion engine according to claim 11, wherein, when the air-fuel ratio of exhaust gas is higher than the predetermined air-fuel ratio, it is determined that the operating state of the engine is such that flames of a rich air-fuel ratio can be generated.

13. The exhaust gas purification apparatus for an internal combustion engine according to claim 12, wherein, when the engine is operating at a light load or decelerating, it is determined that the operating state of the engine is such that flames of a rich air-fuel ratio can be generated.

14. A method of controlling an exhaust gas purification apparatus for an internal combustion engine, the exhaust gas purification apparatus including a small oxidation catalyst (14) that is arranged in an engine exhaust passage and that has a cross-sectional area smaller than a cross-sectional area of the engine exhaust passage, wherein portion of exhaust gas flowing in the engine exhaust passage flows through the small oxidation catalyst (14); and a fuel supply valve (15) that is arranged in the engine exhaust passage and that supplies fuel to the small oxidation catalyst, the method comprising:
determining whether flames is generated by supplying fuel from the fuel supply valve (15); and
when it is determined that the flames is generated by supplying fuel from the fuel supply valve (15), intermittently supplying fuel from the fuel supply valve (15) to the small oxidation catalyst (14) to intermittently generate flames downstream of the small oxidation catalyst (14).

## Patentansprüche

1. Abgasreinigungsvorrichtung für einen Verbrennungsmotor, aufweisend:
einen kleinen Oxidationskatalysator (14), der in einer Motorabgasleitung angeordnet ist und der eine Querschnittsfläche aufweist, die kleiner ist als eine Querschnittsfläche der Motorabgasleitung, wobei ein Teil des in der Motorabgasleitung strömenden Abgases durch den kleinen Oxidationskatalysator strömt;
ein Kraftstoffzuführventil (15), das in der Motorabgasleitung angeordnet ist und das dem kleinen Oxidationskatalysator (14) Kraftstoff zuführt, **dadurch gekennzeichnet, dass** sie ferner aufweist:
eine Bestimmungseinheit (30), die bestimmt, ob durch Zuführen von Kraftstoff aus dem Kraftstoffzuführventil (15) Flammen erzeugt werden; und
eine Steuerungseinheit (30), die, wenn die Bestimmungseinheit (30) bestimmt, dass die Flammen durch Zuführen von Kraftstoff aus dem Kraftstoffzuführventil (15) erzeugt werden, aus dem Kraftstoffzuführventil (15) dem kleinen Oxidationskatalysator (14) Kraftstoff periodisch zuführt, so dass stromabwärts des kleinen Oxidationskatalysators (14) periodisch Flammen erzeugt werden.

2. Abgasreinigungsvorrichtung für einen Verbrennungsmotor nach Anspruch 1, wobei ein Zeitpunkt, zu dem aus dem Kraftstoffzuführventil (15) Kraftstoff zugeführt wird, so eingestellt ist, dass Flammenmassen, die stromabwärts des kleinen Oxidationskatalysators (14) nacheinander periodisch erzeugt werden, einander nicht überlappen.

3. Abgasreinigungsvorrichtung für einen Verbrennungsmotor nach Anspruch 2, wobei ein Zeitpunkt, zu dem aus dem Kraftstoffzuführventil (15) Kraftstoff zugeführt wird, so eingestellt ist, dass Kraftstoff aus dem kleinen Oxidationskatalysator (14) periodisch zugeführt wird.

4. Abgasreinigungsvorrichtung für einen Verbrennungsmotor nach Anspruch 2, wobei ein Zeitpunkt, zu dem Kraftstoff aus dem Kraftstoffzuführventil (15) zugeführt wird, so eingestellt ist, dass Abgas mit einem fetten Kraftstoff-Luftverhältnis periodisch aus dem kleinen Oxidationskatalysator (14) herausströmt.

5. Abgasreinigungsvorrichtung für einen Verbrennungsmotor nach einem der Ansprüche 1 bis 4, wobei der kleine Oxidationskatalysator (14) eine zylindrische Form aufweist, die sich in einer Richtung erstreckt, in der ein Abgas strömt.

6. Abgasreinigungsvorrichtung für einen Verbrennungsmotor nach Anspruch 5, wobei Kraftstoff aus dem Kraftstoffzuführventil (15) einer stromauf befindlichen Endfläche des kleinen Oxidationskatalysators (14) zugeführt wird.

7. Abgasreinigungsvorrichtung für einen Verbrennungsmotor nach einem der Ansprüche 1 bis 6, wobei ein Intervall von Zeitpunkten, zu denen die Zuführung von Kraftstoff aus dem Kraftstoffzuführventil (15) gestartet wird, verlängert wird, wenn eine Ansaugluftmenge abnimmt.

8. Abgasreinigungsvorrichtung für einen Verbrennungsmotor nach einem der Ansprüche 1 bis 7, ferner aufweisend:
eine Sekundärluft-Zuführvorrichtung (45), die in die Motorabgasleitung eine Sekundärluft einführt, wobei,
wenn Sauerstoff nicht ausreichend vorhanden ist, um Flammen zu erzeugen, die Sekundärluft in die Motorabgasleitung eingeführt wird.

9. Abgasreinigungsvorrichtung für einen Verbrennungsmotor nach einem der Ansprüche 1 bis 8, ferner aufweisend:
einen Abgasreinigungskatalysator (13) und/oder einen Partikelfilter (16), die in der Motorabgasleitung an einem Bereich stromabwärts des kleinen Oxidationskatalysators (14) angeordnet sind, wobei Flammen erzeugt werden, wenn die Temperatur des Abgasreinigungskatalysators (13) und/oder des Partikelfilters (16) erhöht werden muss.

10. Abgasreinigungsvorrichtung für einen Verbrennungsmotor nach einem der Ansprüche 1 bis 9, ferner aufweisend:
einen NOₓ-Adsorptionskatalysator (17), der in der Motorabgasleitung an einem Bereich stromabwärts des kleinen Oxidationskatalysators (14) angeordnet ist, wobei der NOx-Adsorptionskatalysator (17) das in dem Abgas enthaltende NOx einlagert, wenn das Kraftstoff-Luftverhältnis des in den NOx-Adsorptionskatalysator (17) strömenden Abgases mager ist, und das eingelagerte NOx freisetzt, wenn das Kraftstoff-Luftverhältnis des in den NOx-Adsorptionskatalysator (17) strömenden Abgases fett ist, und wobei Flammen eines fetten Kraftstoff-Luftverhältnisses periodisch erzeugt werden, wenn NOx oder SOx aus dem NOx-Adsorptionskatalysator (17) freigesetzt werden muss.

11. Abgasreinigungsvorrichtung für einen Verbrennungsmotor nach Anspruch 10, wobei, wenn NOx oder SOx aus dem NOx-Adsorptionskatalysator (17) freigesetzt werden muss, bestimmt wird, ob ein Betriebszustand eines Motors derart ist, dass Flammen eines fetten Kraftstoff-Luftverhältnisses erzeugt werden können, wobei, wenn NOx oder SOx aus dem NOx-Adsorptionskatalysator (17) freigesetzt werden muss, und wenn der Betriebszustand des Motors derart ist, dass Flammen eines fetten Kraftstoff-Luftverhältnisses erzeugt werden können, Flammen erzeugt werden, und wobei, wenn NOx oder SOx aus dem NOx-Adsorptionskatalysator (17) freigesetzt werden muss, und wenn der Betriebszustand des Motors nicht derart ist, dass Flammen eines fetten Kraftstoff-Luftverhältnisses erzeugt werden können, das Kraftstoff-Luftverhältnis des Abgases, das in den NOx-Adsorptionskatalysator (17) strömt, fett gemacht wird, ohne Flammen zu erzeugen.

12. Abgasreinigungsvorrichtung für einen Verbrennungsmotor nach Anspruch 11, wobei, wenn das Kraftstoff-Luftverhältnis des Abgases höher ist als das vorbestimmte Kraftstoff-Luftverhältnis, bestimmt wird, dass der Betriebszustand des Motors derart ist, dass Flammen eines fetten Kraftstoff-Luftverhältnisses erzeugt werden können.

13. Abgasreinigungsvorrichtung für einen Verbrennungsmotor nach Anspruch 12, wobei, wenn der Motor bei einer niedrigen Last arbeitet oder abgebremst wird, bestimmt wird, dass der Betriebszustand des Motors derart ist, dass Flammen eines fetten Kraftstoff-Luftverhältnisses erzeugt werden können.

14. Verfahren zum Steuern einer Abgasreinigungsvorrichtung für einen Verbrennungsmotor, wobei die Abgasreinigungsvorrichtung einen kleinen Oxidationskatalysator (14), der in einer Motorabgasleitung angeordnet ist und der eine Querschnittsfläche aufweist, die kleiner ist als eine Querschnittsfläche der Motorabgasleitung, wobei ein Teil des in die Motorabgasleitung strömenden Abgases durch den kleinen Oxidationskatalysator (14) strömt; und ein Kraftstoffzuführventil (15) beinhaltet, das in der Motorabgasleitung angeordnet ist und das dem kleinen Oxidationskatalysator Kraftstoff zuführt, wobei das Verfahren folgende Schritte beinhaltet:
Bestimmen, ob Flammen durch Zuführen von Kraftstoff aus dem Kraftstoffzuführventil (15) erzeugt werden; und
wenn bestimmt wird, dass die Flammen durch Zuführen von Kraftstoff aus dem Kraftstoffzuführventil (15) erzeugt werden, periodisches Zuführen von Kraftstoff aus dem Kraftstoffzuführventil (15) zu dem kleinen Oxidationskatalysator (14), so dass stromabwärts des kleinen Oxidationskatalysators (14) periodisch Flammen erzeugt werden.

## Revendications

1. Appareil de purification de gaz d'échappement pour un moteur à combustion interne, comportant :
un petit catalyseur d'oxydation (14) qui est disposé dans un passage d'échappement de moteur et qui a une section plus petite qu'une section du passage d'échappement de moteur, une partie de gaz d'échappement qui s'écoule dans le passage d'échappement de moteur s'écoulant à travers le petit catalyseur d'oxydation ;
une soupape d'alimentation en carburant (15) qui est disposée dans le passage d'échappement de moteur et qui délivre du carburant au petit catalyseur d'oxydation (14),
**caractérisé en ce que** il comporte en outre une unité de détermination (30) qui déterminent si des flammes sont générées en délivrant du carburant à partir de la soupape d'alimentation en carburant (15) ; et
une unité de commande (30) qui, quand l'unité de détermination (30) détermine que les flammes sont générées en délivrant du carburant à partir de la soupape d'alimentation en carburant (15), délivre de manière intermittente du carburant à partir de la soupape d'alimentation en carburant (15) au petit catalyseur d'oxydation (14) afin de générer de manière intermittente des flammes en aval du petit catalyseur d'oxydation (14).

2. Appareil de purification de gaz d'échappement pour un moteur à combustion interne selon la revendication 1, dans lequel un instant où du carburant est délivré à partir de la soupape d'alimentation en carburant (15) est établi de telle sorte que des masses de flamme générées de manière séquentielle et intermittente en aval du petit catalyseur d'oxydation (14) ne se recouvrent pas.

3. Appareil de purification de gaz d'échappement pour un moteur à combustion interne selon la revendication 2, dans lequel un instant où du carburant est délivré à partir de la soupape d'alimentation en carburant (15) est établi de telle sorte que du carburant est délivré de manière intermittente à partir du petit catalyseur d'oxydation (14).

4. Appareil de purification de gaz d'échappement pour un moteur à combustion interne selon la revendication 2, dans lequel un instant où du carburant est délivré à partir de la soupape d'alimentation en carburant (15) est établi de telle sorte que du gaz d'échappement ayant un rapport air-carburant riche s'écoule de manière intermittente hors du petit catalyseur d'oxydation (14).

5. Appareil de purification de gaz d'échappement pour un moteur à combustion interne selon l'une quelconque des revendications 1 à 4, dans lequel le petit catalyseur d'oxydation (14) a une forme cylindrique s'étendant dans une direction dans laquelle du gaz d'échappement s'écoule.

6. Appareil de purification de gaz d'échappement pour un moteur à combustion interne selon la revendication 5, dans lequel du carburant est délivré à partir de la soupape d'alimentation en carburant (15) vers une face d'extrémité amont du petit catalyseur d'oxydation (14).

7. Appareil de purification de gaz d'échappement pour un moteur à combustion interne selon l'une quelconque des revendications 1 à 6, dans lequel un intervalle des instants où l'alimentation en carburant à partir de la soupape d'alimentation en carburant (15) est commencée, est prolongé lorsque la quantité d'air admis diminue.

8. Appareil de purification de gaz d'échappement pour un moteur à combustion interne selon l'une quelconque des revendications 1 à 7, comportant en outre :
un dispositif d'alimentation en air secondaire (45) qui délivre de l'air secondaire dans le passage d'échappement de moteur, dans lequel
quand l'oxygène est insuffisant pour générer des flammes, de l'air secondaire est délivré dans le passage d'échappement de moteur.

9. Appareil de purification de gaz d'échappement pour un moteur à combustion interne selon l'une quelconque des revendications 1 à 8, comportant en outre :
un d'un catalyseur de purification de gaz d'échappement (13) et d'un filtre à particules (16) disposé dans le passage d'échappement de moteur au niveau d'une partie en aval du petit catalyseur d'oxydation (14), des flammes étant générées quand la température de l'un du catalyseur de purification de gaz d'échappement (13) et du filtre à particules (16) doit être augmentée.

10. Appareil de purification de gaz d'échappement pour un moteur à combustion interne selon l'une quelconque des revendications 1 à 9, comportant en outre :
un catalyseur d'occlusion de NOₓ (17) disposé dans le passage d'échappement de moteur au niveau d'une partie en aval du petit catalyseur d'oxydation (14), le catalyseur d'occlusion de NOₓ (17) assurant l'occlusion du NOₓ contenu dans du gaz d'échappement quand le rapport air-carburant du gaz d'échappement s'écoulant dans le catalyseur d'occlusion de NOₓ (17) est pauvre, et libérant le NOₓ occlus quand le rapport air-carburant du gaz d'échappement s'écoulant dans le catalyseur d'occlusion de NOₓ (17) est riche, et des flammes d'un rapport air-carburant riche étant générées de manière intermittente quand du NOₓ ou du SOₓ doit être libéré du catalyseur d'occlusion de NOₓ (17).

11. Appareil de purification de gaz d'échappement pour un moteur à combustion interne selon la revendication 10, dans lequel, quand du NOₓ ou du SOₓ doit être libéré du catalyseur d'occlusion de NOₓ (17), on détermine si un état de fonctionnement d'un moteur est tel que des flammes d'un rapport air-carburant riche peuvent être générées, dans lequel, quand du NOₓ ou du SOₓ doit être libéré par le catalyseur d'occlusion de NOₓ (17), et quand l'état de fonctionnement du moteur est tel que des flammes d'un rapport air-carburant riche peuvent être générées, des flammes sont générées, et dans lequel, quand du NOₓ ou du SOₓ doit être libéré du catalyseur d'occlusion de NOₓ (17), et quand l'état de fonctionnement du moteur n'est pas tel que des flammes d'un rapport air-carburant riche peuvent être générées, le rapport air-carburant du gaz d'échappement qui s'écoule dans le catalyseur d'occlusion de NOₓ (17) est rendu riche sans générer de flammes.

12. Appareil de purification de gaz d'échappement pour un moteur à combustion interne selon la revendication 11, dans lequel, quand le rapport air-carburant du gaz d'échappement est plus grand que le rapport air-carburant prédéterminé, on détermine que l'état de fonctionnement du moteur est tel que des flammes d'un rapport air-carburant riche peuvent être générées.

13. Appareil de purification de gaz d'échappement pour un moteur à combustion interne selon la revendication 12, dans lequel, quand le moteur fonctionne à faible charge ou ralentit, on détermine que l'état de fonctionnement du moteur est tel que des flammes d'un rapport air-carburant riche peuvent être générées.

14. Procédé de commande d'un appareil de purification de gaz d'échappement pour un moteur à combustion interne, l'appareil de purification de gaz d'échappement comprenant un petit catalyseur d'oxydation (14) qui est disposé dans un passage d'échappement de moteur et qui a une section plus petite qu'une section du passage d'échappement de moteur, une partie de gaz d'échappement qui s'écoule dans le passage d'échappement de moteur s'écoulant à travers le petit catalyseur d'oxydation ; et une soupape d'alimentation en carburant (15) qui est disposée dans le passage d'échappement de moteur et qui délivre du carburant au petit catalyseur d'oxydation (14), le procédé comportant le fait de
déterminer si des flammes sont générées en délivrant du carburant à partir de la soupape d'alimentation en carburant (15) ; et
lorsque l'on détermine que les flammes sont générées en délivrant du carburant à partir de la soupape d'alimentation en carburant (15), délivrer de manière intermittente du carburant à partir de la soupape d'alimentation en carburant (15) au petit catalyseur d'oxydation (14) afin de générer de manière intermittente des flammes en aval du petit catalyseur d'oxydation (14).
